Europäisches Patentamt

European Patent Office

Office européen des brevets

(19)

(11) Numéro de publication : **0 208 633**
**B1**

(12) **FASCICULE DE BREVET EUROPÉEN**

(45) Date de publication du fascicule du brevet :
30.11.88

(51) Int. Cl.⁴ : **B 60 B 19/00**

(21) Numéro de dépôt : 86420171.0

(22) Date de dépôt : 26.06.86

(54) **Système de roue rapidement démontable par rapport à un support.**

(30) Priorité : 28.06.85 FR 8510118

(43) Date de publication de la demande :
14.01.87 Bulletin 87/03

(45) Mention de la délivrance du brevet :
30.11.88 Bulletin 88/48

(84) Etats contractants désignés :
AT BE CH DE FR GB IT LI LU NL SE

(56) Documents cités :
BE-A- 387 437
CH-A- 331 106
FR-A- 980 314
GB-A- 1 148 021
US-A- 1 406 122
US-A- 1 566 467
US-A- 4 045 096

(73) Titulaire : **Société pour la Transformation des Matières Plastiques STAMP**
**F-01760 Nurieux-Volognat (FR)**

(72) Inventeur : **Massonet, Henry**
**F-01760 Nurieux-Volognat (FR)**

(74) Mandataire : **Karmin, Roger et al**
**Cabinet MONNIER 150, cours Lafayette**
**F-69003 Lyon (FR)**

EP 0 208 633 B1

## Description

La présente invention est relative à un système de roue, démontable très rapidement par rapport à un support constitué par exemple par le pied d'un châssis de repos tel qu'une chaise longue ou analogue.

On sait que la clientèle apprécie tout particulièrement les chaises longues ou « bain de soleil » qu'on peut déplacer comme une brouette grâce à deux roues associées aux pieds avant ou arrière dudit article. Toutefois, lorsque ceux-ci sont pourvus de roues, leur empilage est pratiquement impossible à moins de démonter ces roues. On comprend aisément qu'un tel démontage soit fastidieux, de sorte qu'il n'est pas possible de l'envisager.

Les perfectionnements qui font l'objet de la présente invention visent à permettre la réalisation d'un système de roue démontable de manière instantanée et sans l'utilisation d'aucun outil.

Le système de roue suivant l'invention est essentiellement remarquable en ce que la roue comporte un voile annulaire vertical s'engageant dans une saignée verticale ouverte vers le sol ménagée de manière déportée vers l'extérieur à la base d'un support et dont le fond arrondi constitue butée contre laquelle porte une partie de l'arête intérieure du voile soit au repos, soit lorsque la roue tourne par la suite d'un déplacement du support.

Ainsi, lorsque la roue est engagée dans la saignée verticale, sa périphérie repose contre le sol, de sorte qu'en équipant les deux pieds correspondants d'une chaise longue ou d'un bain de soleil, on peut déplacer celui-ci comme une brouette. Lorsqu'on désire empiler de tels articles, il suffit d'extraire les roues de leurs saignées verticales et d'engager les uns dans les autres les supports ou pieds correspondants.

Le dessin annexé, donné à titre d'exemple, permettra de mieux comprendre l'invention, les caractéristiques qu'elle présente et les avantages qu'elle est susceptible de procurer :

Fig. 1 est une vue en perspective éclatée d'un système de roue démontable établi conformément à l'invention.

Fig. 2 est une vue par côté avec arrachement montrant la manière dont une roue est mise en place sur son support.

Fig. 3 et 4 illustrent à plus grande échelle et en coupe transversale partielle suivant III-III (fig. 2) les deux phases successives de mise en place d'une roue sur son support.

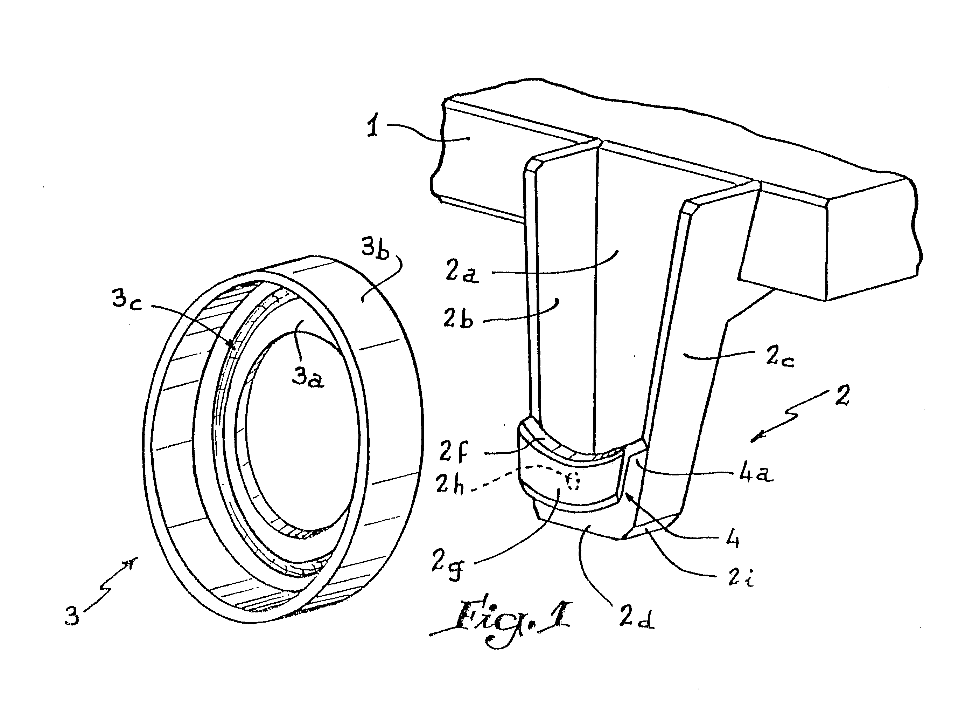

On a illustré partiellement en fig. 1 un châssis 1 pourvu de pieds 2 auxquels on veut associer de manière aisément démontable une roue 3. Le châssis 1 peut constituer l'élément principal d'un bain de soleil ou de tout autre article qu'on désire déplacer à la manière d'une brouette.

Chaque pied 2 comprend un petit panneau vertical 2a de forme trapézoïdale dont la petite base constitue l'extrémité libre dudit pied, les deux côtés obliques divergents vers le haut du panneau 2a étant associés à deux ailes 2b, 2c orientées perpendiculairement audit panneau. De cette manière, le pied 2 est creux et ouvert en direction de l'extérieur. Les dimensions des pieds sont telles qu'on peut empiler des châssis 1 les uns sur les autres, leurs pieds respectifs s'engageant dans ceux des autres châssis.

Les parties basses des deux ailes 2b, 2c sont réunies par une paroi verticale 2d dont l'arête libre est concave en direction du haut. A cette arête est associée une cloison transversale étroite 2f à partir de laquelle part un secteur vertical plan 2 g orienté vers le bas et parallèle à la paroi 2d. Ainsi ce secteur 2 g, la cloison 2f et la paroi 2d constituent-ils une saignée verticale 4 ouverte vers le bas et sur les côtés et dont le fond 4a est convexe en direction du sol.

La roue 3 est avantageusement réalisée au moyen d'un voile annulaire 3a dont la périphérie est associée à une jante 3b orientée perpendiculairement audit voile, de telle sorte qu'en fait la roue se présente sous la forme d'une cornière roulée dont les ailes sont constituées par le voile 3a et la jambe 3b. La face interne de la jante 3a est pourvue d'une gorge annulaire 3c dont le rôle sera mieux expliqué plus loin. On note que la périphérie interne du voile 3a présente un rayon supérieur à celui du fond 4a de la saignée 4, tandis que son épaisseur est égale au jeu près à la largeur de celle-ci.

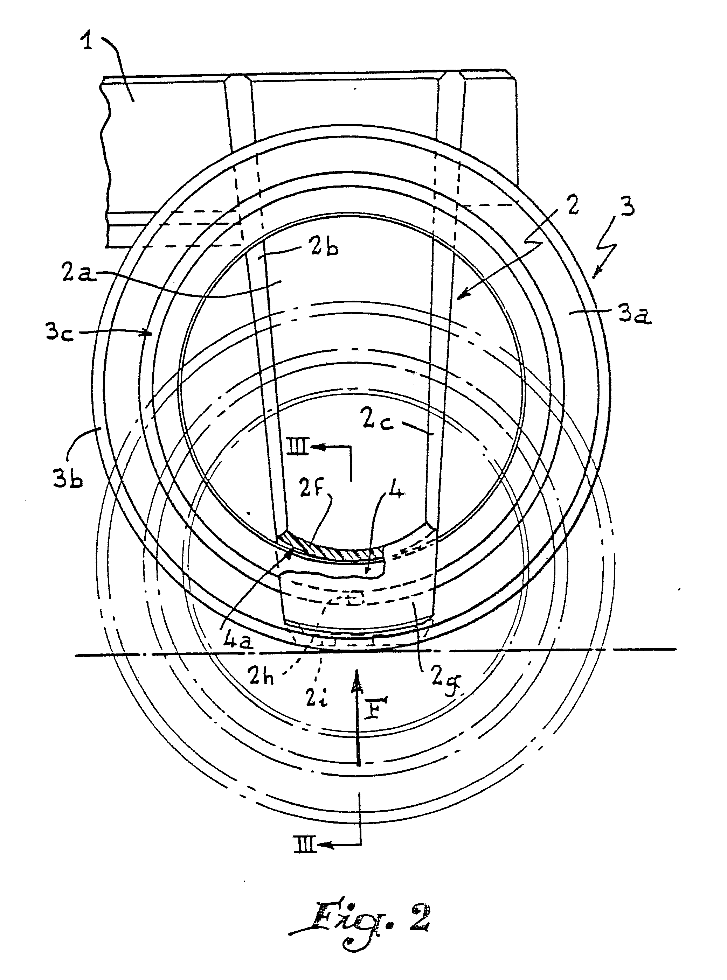

De la description qui précède, on observe que la saignée 4 se trouve déportée vers l'extérieur par rapport au pied 2, de telle sorte qu'on peut plaquer la face extérieure du voile 3a contre les arêtes des ailes 2b et 2c en disposant le secteur 2 g dans l'ouverture centrale dudit voile, comme illustré en traits discontinus en fig. 2.

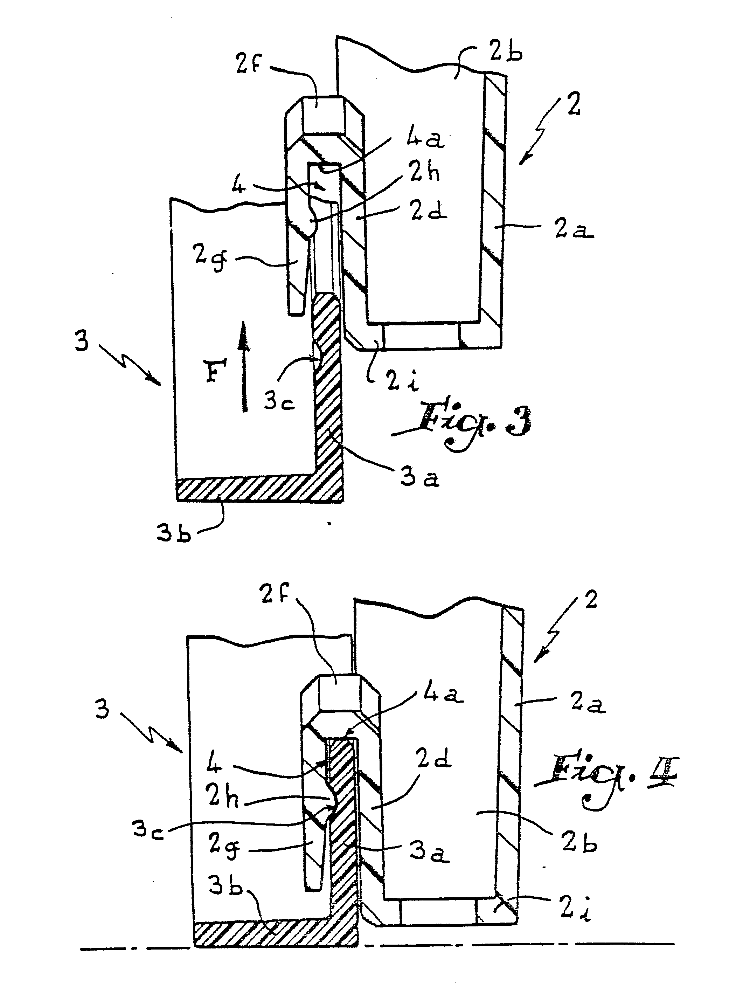

Pour mettre en place la roue, il suffit de lui faire subir une translation vers le haut dans le sens de la flèche F (fig. 2 et 3) afin que le voile pénètre dans la saignée 4, de telle sorte que l'arête interne de ce voile vient en contact avec le fond 4a de la saignée 4 de plus faible rayon de courbure. On observe que la face interne du secteur 2 g comporte un téton 2h, qui fait saillie dans la saignée 4, de telle sorte que lors de la mise en place de la roue 3 dans cette saignée, ledit téton vient s'engager élastiquement dans la gorge 3c de la roue 3 par suite de l'élasticité du secteur 2 g qui est déformé vers l'extérieur lors du passage du voile 3a. La roue est donc maintenue dans la saignée, si bien qu'on peut soulever le châssis 1 sans que les roues associées à ses pieds 2 ne se dégagent seules.

L'extraction de la roue s'effectue en exerçant sur elle un effort dans le sens inverse de celui de la flèche F après avoir bien entendu soulevé le châssis de manière à permettre l'extraction du voile 3a de la saignée 4. La hauteur du voile 3a de la roue 3 est telle que la jante 3b qui lui est associée dépasse ou au plus affleure le bas du pied 2 qui est fermé par une patte 2i.

**Revendications**

1. Système de roue (3) démontable par rapport à un support (2), caractérisé en ce que la roue (3) comporte un voile annulaire (3a) s'engageant dans une saignée verticale (4) ouverte vers le bas et à ses extrémités, ménagée de manière déportée vers l'extérieur à la base du support (2) et dont le fond arrondi (4a) constitue butée contre laquelle porte une partie de l'arête intérieure du voile (3a) soit au repos, soit lorsque la roue (3) tourne par suite du déplacement du support (2).

2. Système suivant la revendication 1, caractérisé en ce que la saignée (4) est réalisée au moyen d'un secteur plan (2 g) situé à l'extérieur du support (2) et relié à celui-ci par une cloison transversale (2f) dont la paroi interne constitue le fond arrondi (4a) de la saignée (4).

3. Système suivant la revendication 2, caractérisé en ce que le rayon du fond arrondi (4a) de la saignée (4) est inférieur à celui de l'arête interne (3a) du voile (3).

4. Système suivant l'une quelconque des revendications 1 à 3, caractérisé en ce que la roue (3) comporte une jante circulaire (3b) se dressant perpendiculairement à la périphérie du voile annulaire (3a).

5. Système suivant la revendication 4, caractérisé en ce que l'une des faces du voile (3a) est pourvue d'une gorge annulaire (3c) dans laquelle s'engage élastiquement un téton (2h) disposé en saillie sur la face correspondante de la saignée verticale (4).

**Claims**

1. System with a wheel (3) detachable in relation to a support (2), characterised in that the wheel (3) comprises an annular disc (3a) engaging in a vertical groove, open towards the bottom and at its ends, arranged so as to be offset outwards at the base of the support (2) and whereof the rounded bottom (4a) constitutes a stop against which a part of the inner edge of the disc (3a) bears, either at rest or when the wheel (3) is turning following displacement of the support (2).

2. System according to Claim 1, characterised in that the groove (4) is formed by means of a plane sector (2 g) located at the outside of the support (2) and connected thereto by a transverse bulkhead (2f), the inner wall whereof constitutes the rounded bottom (4a) of the groove (4).

3. System according to Claim 2, characterised in that the radius of the rounded bottom (4a) of the groove (4) is smaller than that of the inner edge (3a) of the disc (3).

4. System according to any one of Claims 1 to 3, characterised in that the wheel (3) comprises a circular rim (3b) extending perpendicular to the periphery of the annular disc (3a).

5. System according to Claim 4, characterised in that one of the faces of the disc (3a) is provided with an annular groove (3c) in which resiliently engages a nipple (2h), arranged so as to project from the corresponding face of the vertical groove (4).

**Patentansprüche**

1. Von einer Stütze (2) abnehmbares Rad-System (3), dadurch gekennzeichnet, daß das Rad einen ringförmigen Flansch (3a) aufweist, der in einen senkrechten, nach unten offenen, an den Enden der Basis der Stütze (2) nach außen versetzten Schlitz (4) eingreift, und dessen abgerundeter Boden (4a) einen Anschlag bildet, gegen den ein Teil der Innenkante des Flansches (3a) entweder während des Stillstandes des Rades oder wenn sich dieses infolge Verschiebens der Stütze (2) dreht, zur Anlage kommt.

2. System nach Anspruch 1, dadurch gekennzeichnet, daß der Schlitz (4) durch einen ebenen Abschnitt (2 g) gebildet wird, der außen an der Stütze (2) liegt und durch eine Querwand (2f) mit ihm verbunden ist, und dessen Innenwand den abgerundeten Boden (4a) des Schlitzes (4) bildet.

3. System nach Anspruch 2, dadurch gekennzeichnet, daß der Radius des abgerundeten Bodens (4a) des Schlitzes (4) kleiner ist als der Radius der Innenkante (3a) des Flansches (3).

4. System nach einem der Ansprüche 1 bis 3, dadurch gekennzeichnet, daß das Rad (3) eine ringförmige Felge (3b) aufweist, die sich senkrecht zum Umfang des ringförmigen Flansches (3a) erstreckt.

5. System nach Anspruch 4, dadurch gekennzeichnet, daß eine der Flächen des Flansches (3a) mit einer ringförmigen Kehle (3c) versehen ist, in die federnd ein Finger (2h) eingreift, der aus der entsprechenden Fläche des senkrechten Schlitzes (4) herausragt.

*Fig. 1*

0 208 633

*Fig. 2*

Fig. 3

Fig. 4